# EUROPÄISCHE PATENTSCHRIFT

(11) **EP 2 540 151 B1**
(45) Veröffentlichungstag und Bekanntmachung des Hinweises auf die Patenterteilung: **29.05.2013**
(21) Anmeldenummer: 11005235.4
(22) Anmeldetag: 28.06.2011
(51) Int. Cl.: A01D 90/04, A01F 15/10

(54) **Geteilte Schneidvorrichtung für Halm- und Blattgut**
Partitioned cutting device for stalk and leaf crop
Dispositif de coupe divisé pour produits à tiges et feuilles

(43) Veröffentlichungstag der Anmeldung: 02.01.2013
(73) Patentinhaber: B. Strautmann & Söhne GmbH & Co.KG, 49196 Bad Laer (DE)
(72) Erfinder: Schmidt, Markus, 51570 Windeck (DE)
(74) Vertreter: Hoffmeister, Helmut

(56) Entgegenhaltungen:
- EP-A2- 0 792 576
- DE-A1-102005 040 711

## Beschreibung

Die Erfindung betrifft eine Schneidvorrichtung für Halm- und Blattgut in der Ausgestaltung nach dem Oberbegriff in Anspruch 1.

Die Arbeitsweise der Schneidvorrichtungen für Halm- und Blattgut ist im Allgemeinen zufriedenstellend. Die Herstellungs-, Wartungs- und Reparaturkosten gut funktionierender Schneidevorrichtungen sind jedoch noch sehr hoch. So ist nach dem Patent EP 0792576 eine Ausführung bekannt, bei der ein erheblicher Arbeitsaufwand zur Montage der Außenringe anfällt, da daran angeordnete Messerträger wegen ihrer die Lagerringe seitlich übergreifenden Ränder die Vormontage relevanter Teile verhindern. Beim Zusammenbau ergibt sich eine erschwerte Schraub- und Montagearbeit. Ein Austausch verschlissener oder defekter Bauteile ist wegen des enormen Arbeitsaufwandes mit sehr hohen Kosten verbunden. Bei der Herstellung der Außenringe ist, durch fehlende Verwertungsmöglichkeiten der anfallenden Innenstücke der Materialabfall sehr hoch.

Der Erfindung liegt die Aufgabe zugrunde, die vorstehend genannten Mängel zu beseitigen.

Die Aufgabe wird erfindungsgemäß mit einer Schneidvorrichtung nach dem Oberbegriff des Anspruches 1 dadurch gelöst, dass eine Tragevorrichtung für ein Schneidmesser aus einem Oberteil und einem Unterteil besteht, welche über ein Gelenk schwenkbar miteinander verbunden sind, wobei die geschlossene Tragevorrichtung mit den halbkreisförmigen Innenflächen von Oberteil und Unterteil konzentrisch einen Lagerring des Tragrohres umfasst und die freien Enden von Ober- und Unterteil lösbar miteinander verbunden sind.

Durch die Halbierung der Außenringe, bzw. Aufteilung in zwei Halbkreisringe oder eine analog wirkende Unterteilung einer Tragvorrichtung in ein Oberteil und ein Unterteil, kann die Fertigung material- und zeitsparender und durch die mögliche Vorfertigung einzelner Bauelemente einfacher und montagefreundlicher gestaltet werden. Montage und Austausch von Teilen führen zu geringeren Kosten, größerer Zeitersparnis und erleichterten Arbeitsabläufen.

In einer vorteilhaften Ausgestaltung der Erfindung sind die Enden von Oberteil und Unterteil in geschlossenen Zustand mittels eines lösbaren Verbindungselementes beidseitig miteinander verbunden. Hierdurch vereinfacht sich der Aufbau, da die Verbindungselemente, die beispielsweise aus Schraub- oder Steckverbindung bestehen, auch die Funktion des Gelenks übernehmen.

Weiterhin ist es günstig, wenn am Halbkreisring des Oberteils, Messerträger und Messerspannhebel befestigt sind, da die durch diese Bauteile gebildete Baugruppe sich unabhängig vom kompletten Schneidwerk vormontieren lässt.

Um gute Gleiteigenschaften bei der Verdrehung der Tragevorrichtung auf den Lagerringen zu gewährleisten, ist es günstig, Halbkreisring und Formplatte mit in Aufnahmetaschen befestigten Ringformstücken auszustatten. Soweit Halbkreisring und Formplatte mit solchen Ringformstücken ausgestattet sind, entspricht der Radius der im Einbauzustand zum Lagerring weisenden Fläche dem Radius des Lagerringes. Bezüglich der Innenfläche von Halbkreisring und Formplatte ist es günstig, wenn deren Radius etwas größer ist, als der Radius der genannten Innenfläche der Ringformstücke, da so gewährleistet wird, dass die Ringformstücke eine tragende Funktion ausüben während Halbkreisring und Formplatte selbst keinen Kontakt mit der Außenfläche des Lagerrings aufweisen.

Die Erfindung wird nachstehend an einem Beispiel beschrieben und in den Zeichnungen dargestellt.
- Fig. 1: zeigt einen Querschnitt des in Press- und Förderorgan eines Ladewagens eingebauten Schneidwerkes in Arbeitsstellung,
- Fig. 2a: zeigt den Querschnitt auf die Schneidvorrichtung mit einer geschlossenen Tragvorrichtung, in einer einfachen Ausführung ohne Ringformstücke an Halbkreisring und Formplatte,
- Fig. 2b: zeigt den Querschnitt auf die Schneidvorrichtung mit einer geschlossenen Tragvorrichtung in einer bevorzugten Ausführung mit Ringformstücken an Halbkreisring und Formplatte,
- Fig. 3: zeigt den Querschnitt auf eine Schneidvorrichtung bei geöffneter Tragevorrichtung nach Fig. 2b,
- Fig. 4: zeigt einen Schnitt A-A durch die Tragevorrichtung nach Fig. 2b,
- Fig. 5: zeigt einen weiteren Schnitt B-B nach Fig. 2b,
- Fig. 6: zeigt die Anordnung der Lagerringe auf dem Tragerohr in einer Draufsicht nach Fig. 2b,

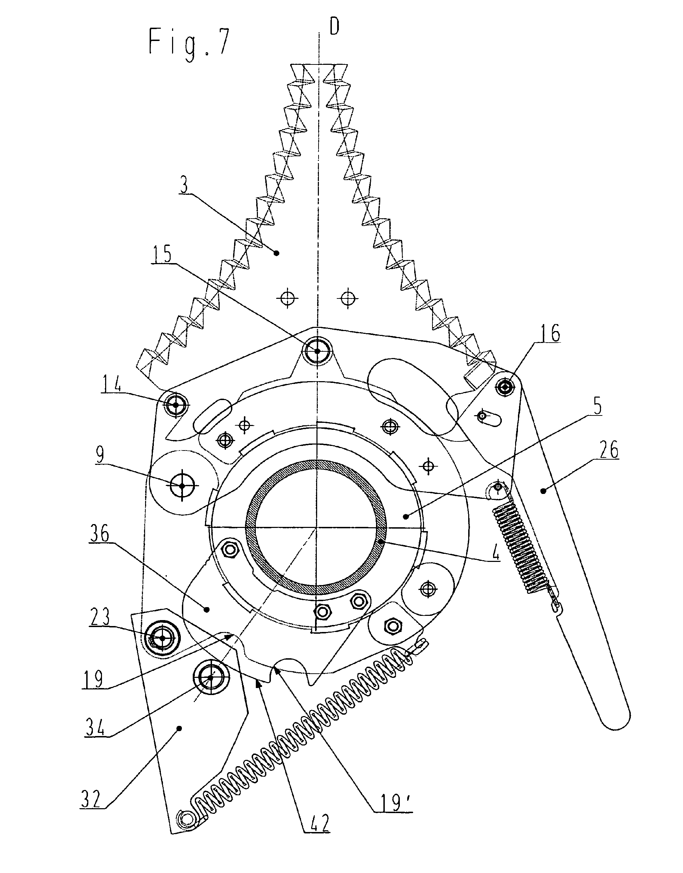

- Fig. 7: zeigt die Tragevorrichtung in einer Position nach dem Ansprechen der Hemmschwelle.

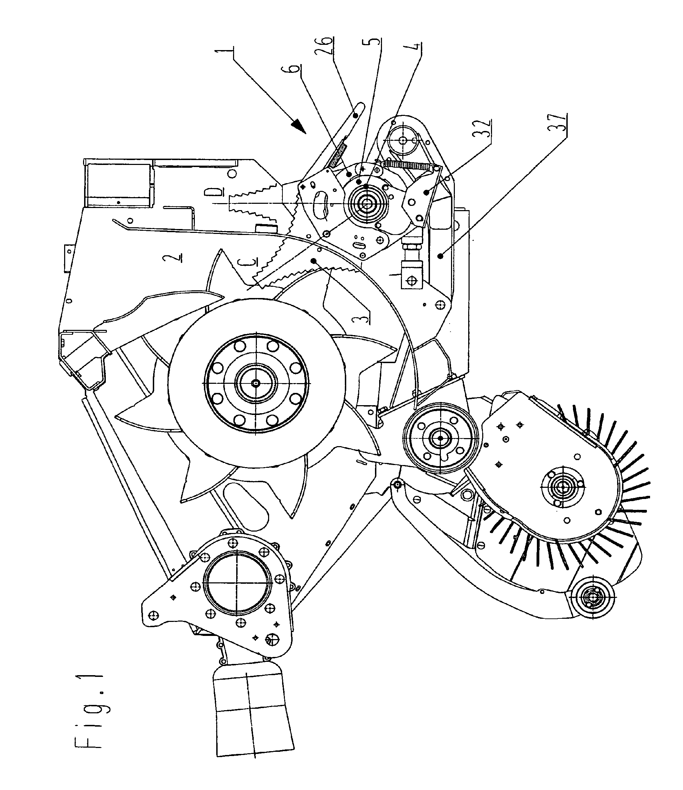

Figur 1 zeigt ein Schneidwerk 1, welches in bekannter Weise hinter einem Press- und Förderkanal 2 eines nicht näher dargestellten Ladewagens mit in den Press- und Förderkanal hineinragenden Schneidemessern 3 dargestellt ist. Ein mit einer Vielzahl von zentrisch angeordneten Lagerringen 5 bestücktes Tragerohr 4, das an den Enden von schwenkbaren Hebeln 37 angebracht und über nicht näher dargestellte Hydrozylinder verstellbar ist, ist in der Arbeitsstellung Position C dargestellt. Die Stellung eines aus dem Press- und Förderkanal 2 ausgeschwenkten Schneidmessers 3 ist andeutungsweise als Position D dargestellt.

Insgesamt ist eine Vielzahl von Schneidmessern 3 vorgesehen, die mit je einer Tragvorrichtung 6 verbunden sind. Im Folgenden wird die Funktionsweise bzw. Ausführungsform bezogen auf eine dieser Tragvorrichtungen 6 beschrieben.

Das Tragrohr 4 ist an seinen Lagerringen 5 jeweils mit einer Tragevorrichtung 6 für ein auswechselbares Schneidmesser 3 versehen.

Die Tragevorrichtung 6 besteht aus einem Oberteil 7 und einem Unterteil 8, welche über ein Gelenk 9 um einen Bolzen 10 verschwenkbar miteinander verbunden sind. Das Oberteil 7 besteht im Wesentlichen aus einem Halbkreisring 11.

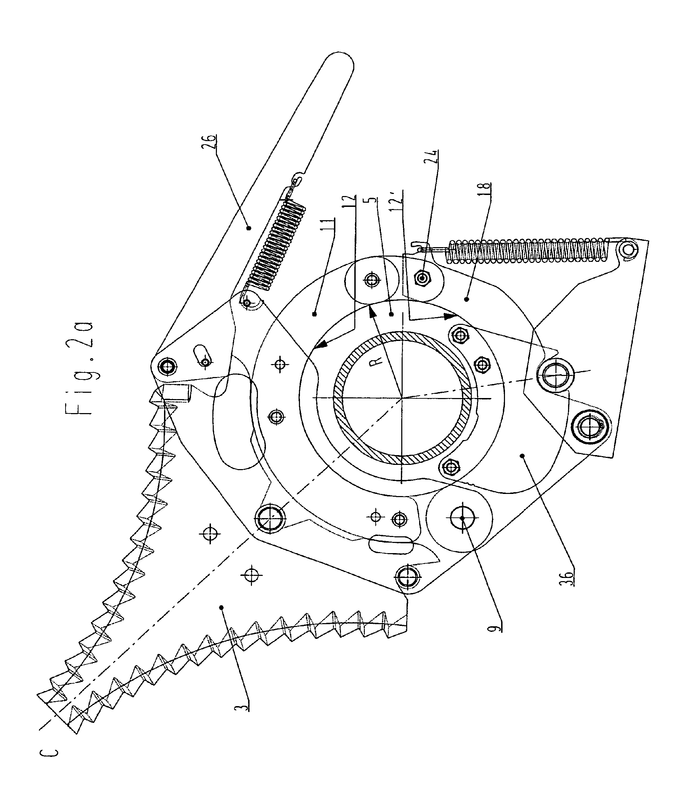

In einer ersten Ausführungsform, die in Figur 2a dargestellt ist, wird die Innenfläche 12 des Halbkreisringes 11 und 12' der Formplatte 18 durch einen Radius R gebildet, der dem Außenradius R eines Lagerringes 5 entspricht. An den Halbkreisring 11 sind beidseitig deckungsgleiche Messerträger 13 befestigt, die die Bolzen 14, 15 und 16 tragen. Auf dem Bolzen 16 ist ein Messerspannhebel 26 gelagert, dessen Schwenkweg mittels eines die Langlöcher 27 der Messerträger 13 durchgreifenden Stiftes 28 begrenzt ist. Die Zugfeder 29 ist zwischen dem Haken 30 des Messerspannhebels 26 und einem Stift 31 zwischen den Messerträgern 13 eingehängt. Am Ende des Halbkreisringes 11 sind gabelförmig mit Löchern 25 versehene Laschen 17 angebracht.

Das Unterteil 8 besteht aus einer Formplatte 18 deren Innenfläche 12' einen Radius R darstellt, der dem Außenradius R des Lagerringes 5 entspricht. An der Außenkontur befindet sich eine Kerbe 19. Am Ende der Formplatte 18 sind ein Loch 20 und ein Haken 21 angebracht. An der Formplatte 18 ist ein Gelenk 23, welches einen Hebel 32 aufnimmt, angeordnet. Dieser Hebel trägt auf einem Bolzen 33 eine Rolle 34, die der Kerbe 19' zugeordnet ist. Eine Zugfeder 22 ist zwischen dem Haken 21 und einem Stift 35 am Hebel 32 eingespannt. Die Verbindung mit dem Oberteil 7 erfolgt über das Gelenk 9 und das Verbindungselement 24.

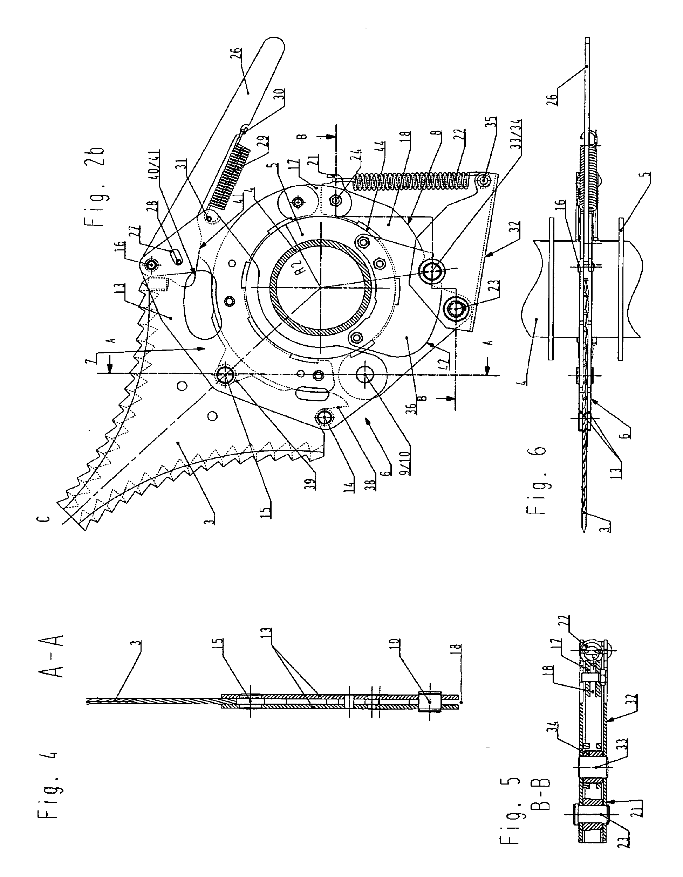

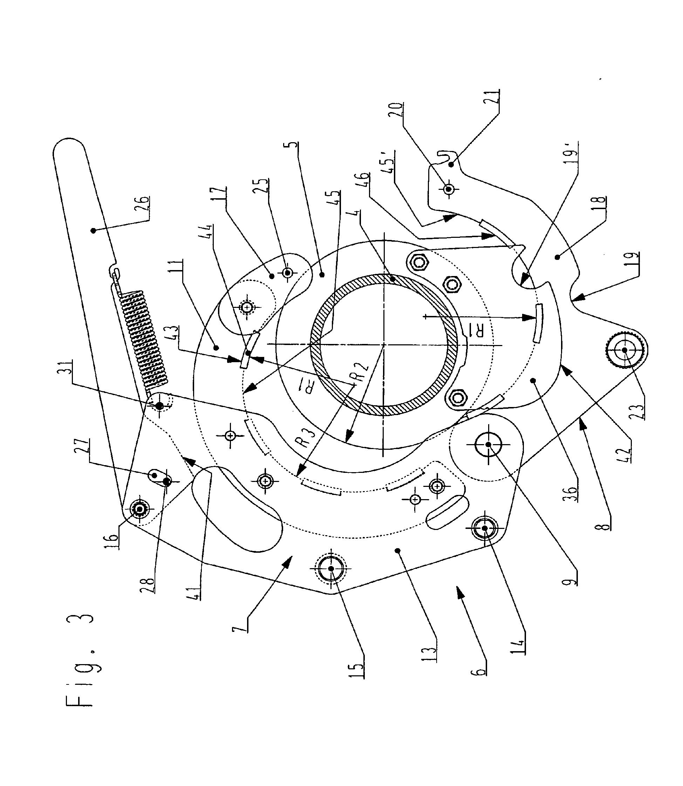

Figur 2b zeigt eine weitere Ausführungsform mit weitgehend identischem Aufbau, jedoch sind an den Innenkonturen von Halbkreisring 11 und Formplatte 18 Aufnahmetaschen 43 für Ringformstücke 44, welche vorzugsweise aus einem Gleitlagermaterial bestehen, vorgesehen. Die Ringformstücke 44 besitzen die gleiche Dicke wie Halbkreisring 11 und Formplatte 18 und sind mit diesen durch Schweißen, Löten oder Einpressen fest verbunden. Wie in Figur 3 ersichtlich weisen die Innenflächen 46 der Ringformstücke 44 einen Radius R1 auf. Der Radius R1 entspricht einem Radius R2 des Lagerringes 5. Halbkreisring 11 und Formplatte 18 weisen an ihren Innenflächen 45 einen Radius R3 auf, der etwas größer ist als der Radius R1 der Ringformstücke 44 und R2 des Lageringes 5. Die Ringformstücke 44 tragen somit die Tragevorrichtung 6.

Sowohl bei der Ausführungsform nach Fig 2a ohne Ringformstücke als auch bei der Ausführungsform 2b mit Ringformstücken sind am Lagerring 5 zur seitlichen Führung der Formplatte 18 beidseitig über Schrauben befestigte Platten 36 deckungsgleich angebracht. Die Kerben 19' in diesen Platten 36 entsprechen in etwa der Kerbe 19 in der Formplatte 18 und liegen annähernd deckungsgleich nebeneinander.

Die geöffnete Tragevorrichtung 6 wird bei der Montage mit ihrer Formplatte 18 zwischen den Platten 36 aufgenommen und legt sich mit der Innenkontur an den Lagerring 5 an, danach wird das Oberteil 7 angeklappt, die Messerträger 13 greifen zur seitlichen Führung über den Lagerringe 5, die Löcher 20, 25 liegen deckungsgleich übereinander, mittels eines Verbindungselementes 24, z.B. einer Schraube, werden Oberteil 7 und Unterteil 8 miteinander verbunden. Die Tragevorrichtung 6, deren Passung zum Lagerring 5 eine Verdrehung zulässt, wird durch Einrasten der Rolle 34 in die Kerbe 19 und 19' in der Platte 36 und die Anbringung der Zugfeder 22 in Position gebracht.

Das Schneidmesser 3 wird in bekannter Weise bei der Montage mit einer Anlagefläche 38 unter dem Bolzen 14 zur Anlage gebracht. Am Bolzen 15 werden die Schub- und Drehmomente des Schneidmessers 3 über den Schlitz 39 aufgenommen. Ein auf dem Bolzen 16 gelagerter Messerspannhebel 26 verriegelt das Schneidmesser 3, wobei die Zugfeder 29 die Anschlagfläche 41 des Messerspannhebels 26 gegen die Anschlagfläche 40 des Schneidmessers 3 drückt. Bei demontierten Schneidmesser 3 stützt sich der Hebel 26 mittels eines Stiftes 28 im Langloch 27 ab.

Die Kerben 19'in den Platten 36 sind als Hemmschwellen ausgebildet, in der in Arbeitsstellung C die Rolle 34 anliegt und dabei die Fixierung der Arbeitsstellung übernimmt.

Die Kerben 19' in den Platten 36 dienen somit der Positionierung des Schneidmesser 3. Bei Überlastung des Schneidmessers 3 spricht die Hemmschwelle an, das wirkende Drehmoment hebt, gegen die am Hebel 32 wirkende Kraft der Zugfeder 22, die Rolle 34 an, sie weicht aus der Kerbe 19' auf die Rollfläche 42 aus, die das Schneidmesser 3 haltende Tragevorrichtung 6 verdreht sich auf dem Lagerring 5 bis zur Entlastung des Schneidmessers, bzw. bis es aus dem Press- und Förderkanal 2 in die Position D ausgeschwenkt ist.

Über eine Rückstell-Schaltung wird die Tragevorrichtung 6 mit dem Schneidmesser 3 in bekannter Weise wieder in Arbeitsstellung Position C gebracht.

### Bezugszeichenliste

| | | | |
|---|---|---|---|
| 1 | Schneidwerk | 29 | Zugfeder |
| 2 | Press- und Förderkanal | 30 | Haken |
| 3 | Schneidmesser | 31 | Stift |
| 4 | Tragrohr | 32 | Hebel |
| 5 | Lagerring | 33 | Bolzen |
| 6 | Tragevorrichtung | 34 | Rolle |
| 7 | Oberteil | 35 | Stift |
| 8 | Unterteil | 36 | Platte |
| 9 | Gelenk | 37 | Hebel |
| 10 | Bolzen | 38 | Anlagefläche |
| 11 | Halbkreisring | 39 | Schlitz |
| 12, 12' | Innenfläche (von Halbkreisring und Formplatte) | 40 | Anschlagfläche |
| 13 | Messerträger | 41 | Anschlagfläche |
| 14 | Bolzen | 42 | Rollfläche |
| 15 | Bolzen | 43 | Aufnahmetasche |
| 16 | Bolzen | 44 | Ringformstück |
| 17 | Lasche | 45, 45' | Innenfläche (von Halbkreisring und Formplatte) |
| 18 | Formplatte | 46 | Innenfläche (Ringformstück) |
| 19, 19' | Kerbe | | |
| 20 | Loch | R | Radius (von 12 und 12') |
| 21 | Haken | R1 | Radius (Innenfläche der Ringformstücke) |
| 22 | Zugfeder | R2 | Radius (des Lageringes) |
| 23 | Gelenk | R3 | Radius (Halbkreisring und Formplatte) |
| 24 | Verbindungselement | A-A | Schnitt |
| 25 | Loch | B-B | Schnitt |
| 26 | Messerspannhebel | C | Position (Arbeitsstellung) |
| 27 | Langloch | D | Position |
| 28 | Stift | | |

## Patentansprüche

1. Schneidevorrichtung für Halm- und Blattgut, die in den Press- und Förderkanal einer Erntemaschine, z.B. eines Ladewagens oder einer Ballenpresse, mit ihren Schneidmessern (3) eingreift, wobei die Schneidmesser (3) von Außenringen getragen werden, die verdrehbar auf den Lagerringen (5) eines parallel zum Press- und Förderkanal angeordneten Tragerohres (4) angebracht sind, **dadurch gekennzeichnet, dass** eine Tragevorrichtung (6) für ein Schneidmesser (3) aus einem Oberteil (7) und einem Unterteil (8) besteht, welche über ein Gelenk (9) schwenkbar miteinander verbunden sind, wobei die geschlossene Tragevorrichtung (6) mit den halbkreisförmigen Innenflächen (12, 12') von Oberteil (7) und Unterteil (8), konzentrisch einen Lagerring (5) des Tragrohes (4) umfasst und die freien Enden von Ober- und Unterteil (7, 8) lösbar miteinander verbunden sind.

2. Schneidevorrichtung nach Anspruch 1, **dadurch gekennzeichnet, dass** die Enden von Oberteil (7) und Unterteil (8) in geschlossenen Zustand beidseitig mittels eines lösbaren Verbindungselementes (24) miteinander verbunden sind.

3. Schneidevorrichtung nach Anspruch 1 oder 2, **dadurch gekennzeichnet, dass** am Halbkreisring (11) des Oberteils (7) Messerträger (13) und Messerspannhebel (26) befestigt sind.

4. Schneidevorrichtung nach einem der Ansprüchen 1 bis 3, **dadurch gekennzeichnet, dass** an der Formplatte (18) des Unterteils (8) ein Gelenk (23) für einen Hebel (32) angeordnet ist.

5. Schneidvorrichtung nach einem der Ansprüche 1 bis 4, **dadurch gekennzeichnet, dass** Halbkreisring (11) und Formplatte (18) mit in Aufnahmetaschen (43) befestigten Ringformstücken (44) ausgestattet sind.

6. Schneidvorrichtung nach Anspruch 5 **dadurch gekennzeichnet, dass** der Radius (R3) von Halbkreisring (11) und größer ist als der Radius (R1) der Ringformstücke (44).

## Claims

1. Cutting device for stalk and leaf crop which engages with its cutting blades (3) into the pressing and conveying channel of a harvesting machine, e.g., a loader wagon or a baler, wherein the cutting blades (3) are supported by outer rings which are mounted in a rotatable manner on the bearing rings (5) of a support pipe (4) disposed in parallel with the pressing and conveying channel, **characterised in that** a support device (6) for a cutting blade (3) consists of an upper part (7) and a lower part (8) which are connected together in a pivotable manner via an articulation (9), wherein the closed support device (6) having the semicircular-shaped inner surfaces (12, 12') of the upper part (7) and lower part (8) concentrically includes a bearing ring (5) of the support pipe (4) and the free ends of the upper and lower parts (7, 8) are releasably connected together.

2. Cutting device as claimed in Claim 1, **characterised in that** the ends of the upper part (7) and lower part (8) in the closed state are connected together on both sides by means of a releasable connection element (24).

3. Cutting device as claimed in Claim 1 or 2, **characterised in that** blade supports (13) and blade clamping levers (26) are attached to the semicircular ring (11) of the upper part (7).

4. Cutting device as claimed in any one of Claims 1 to 3, **characterised in that** an articulation (23) for a lever (32) is disposed on the shaping plate (18) of the lower part (8).

5. Cutting device as claimed in any one of Claims 1 to 4, **characterised in that** the semicircular ring (11) and shaping plate (18) are provided with annular pieces (44) attached in reception pockets (43).

6. Cutting device as claimed in Claim 5, **characterised in that** the radius (R3) of the semicircular ring (11) is greater than the radius (R1) of the annular pieces (44).

## Revendications

1. Dispositif de coupe pour produits à tiges et à feuilles, dont les lames (3) pénètrent dans le conduit presseur et transporteur d'un engin de récolte, par exemple d'une chargeuse ou d'une presse à balles, lesdites lames (3) étant supportées par des bagues extérieures agencées rotatives sur les bagues d'appui (5) d'un tube de maintien (4) disposé parallèlement audit conduit presseur et transporteur, **caractérisé par** la présence d'un dispositif de maintien (6) d'une lame (3), lequel dispositif (6) est constitué d'un élément supérieur (7) et d'un élément inférieur (8), ces derniers étant reliés pivotants entre eux par l'intermédiaire d'une articulation (9), tandis que ledit dispositif de maintien (6) fermé enveloppe concentriquement - par les surfaces internes semi-circulaires (12, 12') des éléments supérieur (7) et inférieur (8) - une bague d'appui (5) du tube de maintien (4) et que les extrémités libres desdits éléments supérieur (7) et inférieur (8) sont reliées amovibles entre elles.

2. Dispositif de coupe selon la revendication 1, **caractérisé en ce que** les extrémités des éléments supérieur (7) et inférieur (8) sont, à l'état fermé, reliées entre elles sur les deux côtés, au moyen d'un organe de liaison (24) amovible.

3. Dispositif de coupe selon la revendication 1 ou 2, **caractérisé en ce que** des supports de lames (13) et des leviers tendeurs de lames (26) sont fixés sur la bague semi-circulaire (11) de l'élément supérieur (7).

4. Dispositif de coupe selon l'une quelconque des revendications 1 à 3, **caractérisé par** la présence, sur la plaque modèle (18) de l'élément inférieur (8), d'une articulation (23) pour un levier (32).

5. Dispositif de coupe selon l'une quelconque des revendications 1 à 4, **caractérisé en ce que** la bague semi-circulaire (11) et la plaque modèle (18) sont dotées de pièces profilées annulaires (44) fixées dans des poches de logement (43).

6. Dispositif de coupe selon la revendication 5, **caractérisé en ce que** le rayon (R3) de la bague semi-circulaire (11) est supérieur au rayon (R1) des pièces profilées annulaires (44).
